# EUROPÄISCHE PATENTSCHRIFT

(11) **EP 2 594 756 B1**
(45) Veröffentlichungstag und Bekanntmachung des Hinweises auf die Patenterteilung: **19.08.2015**
(21) Anmeldenummer: 11189720.3
(22) Anmeldetag: 18.11.2011
(51) Int. Cl.: F01M 13/04

(54) **Kondensationsvorrichtung**
Condensation device
Dispositif de condensation

(43) Veröffentlichungstag der Anmeldung: 22.05.2013
(73) Patentinhaber: Magna Steyr Fahrzeugtechnik AG & Co KG, 8041 Graz (AT)
(72) Erfinder: Mayr, Franz, 8323 St.Marein bei Graz (AT); Pippenbach, Harald, 8047 Graz (AT)
(74) Vertreter: Zangger, Bernd

(56) Entgegenhaltungen:
- GB-A- 371 131
- JP-A- 59 105 913
- US-A- 2 029 216
- US-A- 3 533 384

## Beschreibung

Die Erfindung betrifft eine Kondensationsvorrichtung für einen Motor mit Wasser enthaltendem Schmierstoff, welche eine erste Leitung umfasst, durch die verdampftes Wasser durch dessen natürliche Konvektion vom Motor abgeführt wird, und eine Druckausgleichsvorrichtung, über die Luft aus der Kondensationsvorrichtung entweichen kann.

In mit Öl geschmierten Getrieben ist eine Entlüftungsöffnung vorhanden, welche bei betriebsbedingtem Anstieg und Abnahme der Temperatur im Getriebe einen Druckausgleich mit der Umgebung erlaubt und in der Regel als Vorrichtung mit Einbauten zum Zurückhalten von Ölnebel und zum Fernhalten von Schmutz aus der Umgebung ausgerüstet ist.

In der WO 2007/098523 A1 ist ein Wasser enthaltender Schmierstoff bekannt, der nebst einem hohen Anteil an Wasser, ein den Gefrierpunkt senkendes Mittel, zum Beispiel Glykol, und weitere Zusätze beziehungsweise Schwebstoffe enthält. Weitere Details dazu sowie die mit einem derartigen Schmiermittel erzielbaren Vorteile sind der genannten Veröffentlichung zu entnehmen.

Die DE Offenlegungsschrift 22 20 565 offenbart ein rezirkulierendes Kühlsystem für mit Öl geschmierte Untersetzungsgetriebe. Ein Gebläse rezirkuliert Öldämpfe enthaltende Luft aus dem Inneren des Getriebes durch einen Wärmetauscher wieder zurück ins Getriebe. Das kondensierte Öl wird getrennt rückgeführt. Ein Druckausgleich mit der Umgebung findet nicht statt.

Aus der WO 2010/037829 A1 ist schließlich eine Entlüftungsvorrichtung für Getriebe mit Wasser enthaltendem Schmierstoff bekannt. Die Entlüftungsvorrichtung ist über eine Leitung mit dem Getriebe verbunden. Die Vorrichtung weist einen Kondensator auf in dem zuströmender Wasserdampf kondensieren kann, so dass das Kondensat über die selbe Leitung wieder in das Getriebe abläuft.

Alle diese Kondensationsvorrichtungen sind dazu ausgelegt, Dampf von Getriebeschmiermitteln zu kondensieren. Zur Schmierung von Verbrennungsmotoren oder auch zur Schmierung und Kühlung von Elektromotoren wird üblicherweise Öl verwendet. Bei der Verwendung eines wässrigen Schmiermittels in Verbrennungskraftmaschinen oder auch in Elektromotoren kommt es aufgrund der hohen thermischen Belastung und Temperaturen von deutlich über 100 Grad Celsius zu einem massiven Verdampfen des wässrigen Anteils und somit zu einer kontinuierlichen Verringerung und zu einer Änderung der Zusammensetzung des Schmier- und Kühlmittels. Anders als bei Getrieben, wird durch den raschen und hohen Temperatureintrag von Bauteilen, wie von den Zylindern bei einer Verbrennungskraftmaschine oder Wicklungen in einem E-Motor, der wässrige Anteil im Schmiermittel sofort verdampft, wodurch es zu einer starken Expansion des Wassers unter Bildung von Wasserdampf kommt. Durch diese stark erhöhte Expansion steigt die Strömungsgeschwindigkeit im Entlüftungssystem und eine wie in der WO 2010/037829 beschriebene Kondensationsvorrichtung kann nicht mehr ausreichend kondensieren. Es ist somit die der Erfindung zugrunde liegende Aufgabe, diesen Nachteil zu beheben und dem Verlust von Wasser an die Umgebung bei starker Bildung von Wasserdampf entgegen zu wirken.

Die Lösung der Aufgabe erfolgt durch eine Kondensationsvorrichtung für einen Motor mit Wasser enthaltendem Schmierstoff, umfassend
- eine erste Leitung durch die verdampftes Wasser durch dessen natürliche Konvektion vom Motor abgeführt wird, und
- eine Druckausgleichsvorrichtung über die Luft aus der Kondensationsvorrichtung entweichen kann, und
- eine zweite, von der ersten Leitung verschiedene und kühlere Leitung, durch die Kondensat zurück zum Motor gelangen kann.

Für die Kondensation ist eine Wärmeabfuhr erforderlich, die auf unterschiedliche Weise erreicht werden kann. In der erfindungsgemäßen Kondensationsvorrichtung wird eine zweite Leitung verwendet, durch die kondensierter Wasserdampf wieder in den Bereich des Motors, insbesondere in einen Schmiermittelsumpf, zurückgeleitet werden kann. In einer einfachen Bauweise, ohne zusätzliche Kühlvorrichtung, wird die Wärmeabfuhr dadurch erreicht, dass das verdampfte und schließlich kondensierte Wasser durch das gesamte Rohrsystem aus erster und zweiter Leitung geführt wird und dabei abkühlt. Die erste Leitung ist dabei durch den zunächst heißen Wasserdampf deutlich wärmer als die zweite Leitung, die im Wesentlichen dem Rückfluss des bereits kondensierten Wassers dient.

Eine von der ersten Leitung verschiedene zweite Leitung ist hierbei so zu verstehen, dass nicht die selben Bereiche der ersten Leitung, durch die bereits Wasserdampf aus dem Motorbereich geleitet wird, auch für die Rückfuhr des Kondensats in den Motorbereich genutzt werden. Eine von der ersten Leitung verschiedene zweite Leitung kann auch durch einen gesonderten Leitungsabschnitt eines mit dem ersten Leiter gemeinsamen Leitungsrohres ausgebildet werden.

Weiterbildungen der Erfindung sind in den abhängigen Ansprüchen, der Beschreibung sowie den beigefügten Zeichnungen angegeben.

Vorzugsweise ist bei einer erfindungsgemäßen Kondensationsvorrichtung ein Kondensator mit einem ersten Mittel zur Wärmeabfuhr zwischen der ersten und der zweiten Leitung angeordnet, wobei durch den Kondensator zuströmendes verdampftes Wasser kondensierbar ist. Durch eine Kondensationsvorrichtung mit einer Kühlvorrichtung kann der durch die erste Leitung steigende Wasserdampf gezielt gekühlt und so das enthaltene Wasser kondensiert werden. Durch die zweite Leitung, die stromabwärts nach dem Kondensator angeordnet ist, wird dadurch nur bereits gekühltes, kondensiertes Wasser geleitet, so dass auch die Temperatur in der zweiten Leitung sinkt und das Wasser ungehindert in den Motorbereich zurückfließen kann.

Gemäß einer weiteren bevorzugten Ausführungsform der Kondensationsvorrichtung ist ein zweites Mittel zur Wärmeabfuhr an der zweiten Leitung angeordnet. Durch eine zweite Kühlung nach dem Kondensator wird erreicht dass eventuell verbleibende Reste von Wasserdampf weiter auskondensiert werden können und so der starken Verdampfung wie sie bei der Schmierung von Verbrennungsmotoren und Elektromotoren auftritt Rechnung getragen wird. Das zusätzlich gewonnene und kondensierte Fluid wird über die zweite Leitung wieder dem Schmiermittelsumpf zugeführt.

Das zweite Mittel zur Wärmeabfuhr kann in einer bevorzugten Ausführungsform ein Lufttrockner sein, beispielsweise ein mechanischer Lufttrockner wie ein Fliehkraftabscheider bzw. Zyklonabscheider. Durch die hohe Strömungsgeschwindigkeit des Wasserdampfes wird eine ausreichend hohe Rotation bzw. Fliehkraft für einen Zyklonabscheider erreicht. Ein Lufttrockner hat auch den Vorteil, dass er nicht nur die Feuchtigkeit dem anströmenden Fluid entzieht, sondern auch Verunreinigungen.

Um Auswirkungen von Druckschwankungen aus dem entlüfteten MotorGehäuse in die Kühleinrichtungen zu vermeiden, ist bei einer erfindungsgemäßen Kondensationsvorrichtung vorzugsweise ein geregelter Kondensatableiter an der zweiten Leitung angeordnet. Insbesondere kommt es durch die bewegten Kolben im Kurbelgehäuse einer Verbrennungskraftmaschine zu Druckschwankungen. Beispielsweise bei Erreichen eines bestimmten Flüssigkeitsstandes im Kondensatableiter oder abhängig von einem Zeitintervall, der Motorlast, der Umgebungs- Bauteil- oder Fluidtemperatur, einer Gaspedalstellung und dergleichen wird der Kondensatableiter geöffnet, so dass das Kondensat wieder dem Schmier- und Kühlkreislauf zugeführt wird.

Der geregelte Kondensatableiter ist vorzugsweise in oder nach dem zweiten Mittel zur Wärmeabfuhr angeordnet, insbesondere also nach einem Lufttrockner bzw. Zyklonabscheider. Ein Zurücktreiben von Wasser in den Lufttrockner kann dadurch verhindert werden.

Der geregelte Kondensatableiter kann ein Schwimmer/Drehschieber-Kondensatableiter sein oder auch ein elektrisch oder mechanisch angesteuertes Ventil.

Bei Stillstand des Motors kann es je nach Bauform des Kondensatableiters dazu kommen, dass eine Restmenge von Wasser im Kondensatableiter verbleibt und bei tiefen Temperaturen einfrieren und die Funktion der Kondensationsvorrichtung beeinträchtigen würde. Daher kann bei einer bevorzugten Ausführung der Kondensationsvorrichtung eine Heizeinrichtung im Bereich des geregelten Kondesatableiters angeordnet sein. Alternativ oder zusätzlich kann zur Vermeidung des beschriebenen Problemes bei tiefen Umgebungstemperaturen der geregelte Kondesatableiter so eingerichtet sein, dass er bei Stillstand des Motors offen ist, so dass Kondensat zum Motor ablaufen kann. Bei einer Inbetriebnahme des Motors kann der Kondensatableiter, beispielsweise Ventil, bis zum Erreichen von positiven Temperaturen im Entlüftungskreislauf offen bleiben.

In einer Ausführungsform der Erfindung ist die Druckausgleichsvorrichtung als Entlüftungsöffnung ausgebildet, durch die Luft in die Umgebung der Kondensationsvorrichtung entweichen kann. Dies ist insbesondere dann vorteilhaft, wenn die Luft durch einen Lufttrockner bereits vor dem Entweichen gereinigt wurde.

In einer anderen Ausführungsform ist die Druckausgleichsvorrichtung so ausgebildet, dass Luft durch die Druckausgleichsvorrichtung in den Bereich des Motors entweichen kann. Die Luft kann insbesondere dem Luftansaugtrakt des Verbrennungsmotors wieder zugeführt werden.

Die Erfindung wird im Folgenden beispielhaft unter Bezugnahme auf die Zeichnungen beschrieben.
- Fig. 1: ist eine schematische Darstellung einer erfindungsgemäßen Kondensationsvorrichtung.
- Fig. 2: ist eine schematische Darstellung einer erfindungsgemäßen Kondensationsvorrichtung in einer weiteren Ausführungsform.
- Fig. 3: ist eine schematische Darstellung einer erfindungsgemäßen Kondensationsvorrichtung in einer weiteren Ausführungsform.
- Fig. 4: ist eine schematische Darstellung einer erfindungsgemäßen Kondensationsvorrichtung in einer weiteren Ausführungsform.
- Fig. 5: ist eine schematische Darstellung einer erfindungsgemäßen Kondensationsvorrichtung in einer weiteren Ausführungsform.
- Fig. 6: ist eine schematische Darstellung einer erfindungsgemäßen Kondensationsvorrichtung in einer weiteren Ausführungsform.

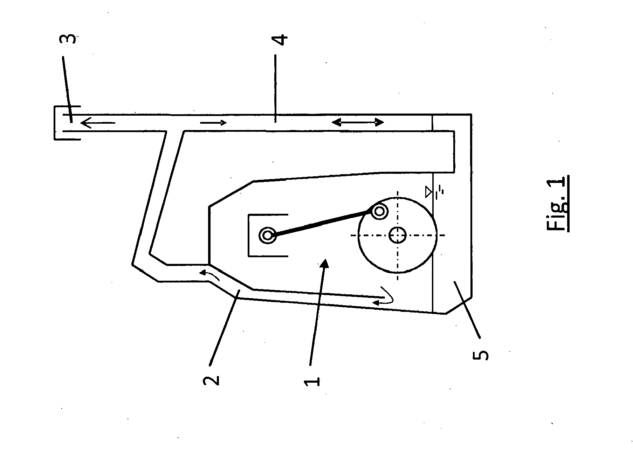

In Fig. 1 ist eine erfindungsgemäße Kondensationsvorrichtung für einen Motor 1 mit Wasser enthaltendem Schmierstoff dargestellt. Der Schmierstoff sammelt sich unterhalb des Motors 1 in einem Sumpf 5. Durch Verdampfen des wässrigen Schmierstoffes steigt Wasserdampf durch die erste Leitung 2 und wird hierdurch aus der heißesten Zone in der Nähe des Motors 1 abgeführt. Vor allem im Bereich zwischen der ersten Leitung 2 und einer zweiten Leitung 4 kondensiert Wasser aus dem Wasserdampf im Leitungskreislauf und rinnt so durch die zweite Leitung 4 zurück in den Schmierstoff-Sumpf 5. Beim Kondensieren freiwerdende Luft kann durch die Druckausgleichsvorrichtung 3 entweichen. In der in Fig. 1 dargestellten Ausführung wird die Druckausgleichsvorrichtung 3 durch eine Entlüftungsöffnung gebildet und die Luft entweicht in die Umgebung der Kondensationsvorrichtung.

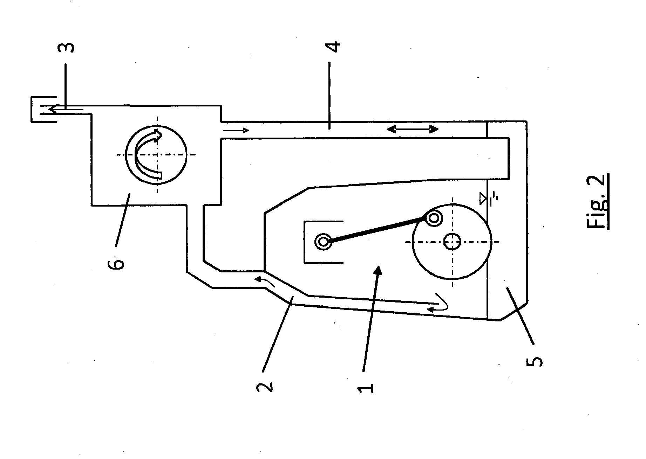

In der in Fig. 2 dargestellten Ausführung ist zwischen der ersten Leitung 2 und der zweiten Leitung 4 ein Kondensator 6 mit einer Kühlvorrichtung angeordnet. Im Bereich des Kondensators 6 kondensiert ein großer Teil des Wasserdampfes zu Wasser, welches durch die zweite Leitung 4 abrinnt. Die abgeschiedene Luft kann durch die Entlüftungsöffnung 3 entweichen.

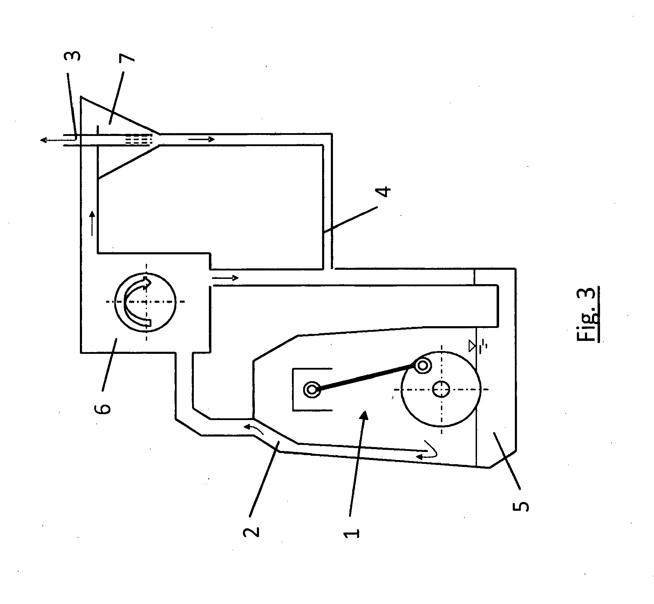

Wie in Fig. 3 dargestellt kann nach dem Kondensator 6 ein zweites Mittel zur Wärmeabfuhr 7, also eine zweite Kühleinrichtung in der zweiten Leitung 4 angeordnet sein. Die zweite Kühlvorrichtung ist hier als Zyklonabscheider ausgebildet. Die Druckausgleichsvorrichtung 3 ist im Bereich des Zyklonabscheiders angeordnet und entläßt Luft in Fig. 3 ebenfalls in die Umgebung.

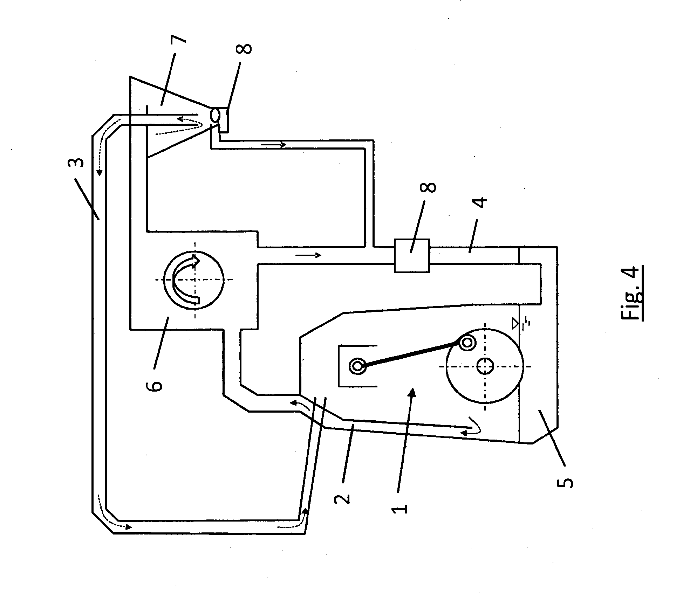

Im Unterschied dazu ist die Druckausgleichsvorrichtung der Fig. 4 so ausgebildet, dass die Luft durch eine weitere Leitung in den Ansaugraum des Verbrennungsmotors 1 geleitet wird und so der Verbrennung durch den Motor 1 zugeführt wird. Weiters sind in Fig. 4 zwei Kondensatableiter 8 dargestellt, wovon der erste im Anschluss an den Zyklonabscheider angeordnet ist und als Sammelbehälter mit Schwimmer-Öffner oder elektrisch betätigtem Ventil ausgeführt ist. Der zweite Kondensatableiter 8 ist nach einer Zusammenführung von parallel verlaufenden zweiten Leitungen 4 angeordnet, welche einerseits nach dem Kondensator 6 direkt zum Schmiermittelsumpf 5 zurückführen und andererseits nach dem Kondensator 6 über das zweite Mittel zur Wärmeabfuhr 7 zum Sumpf 5 zurückführen.

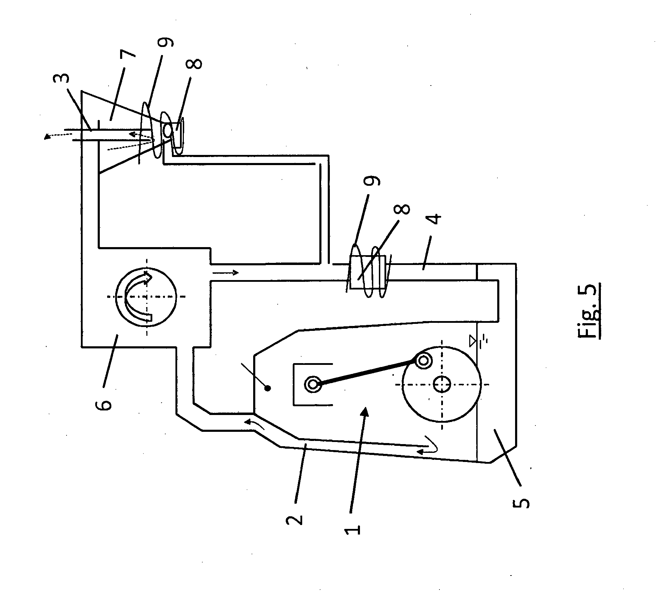

In der Fig. 5 ist dargestellt, dass im Bereich der Kondensatableiter 8 Heizeinrichtungen 9 angeordnet sein können, beispielsweise Heizspiralen, die das Einfrieren des Kondensats bei tiefen Temperaturen verhindern.

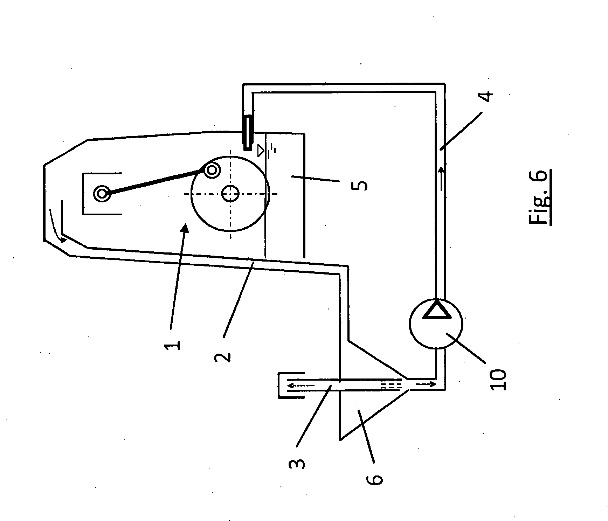

In der erfindungsgemäßen Ausführung nach Fig. 6 wird ein Kondensator 6, beispielsweise ein Lufttrockner unterhalb des Schmiermittelsumpfes 5 angeordnet. Wasserdampf gelangt durch die Leitung 2 zum vorgesehenen Mittel zur Wärmeabfuhr. Das Kondensat wird in diesem Fall mittels einer Pumpe 10 zum Schmiermittelsumpf 5 zurückgeleitet.

Die Erfindung ermöglicht somit eine sichere Kondensation von Wasserdampf für einen Motor mit Wasser enthaltendem Schmierstoff.

### Bezugszeichenliste

- 1: Motor
- 2: erste Leitung
- 3: Druckausgleichsvorrichtung
- 4: zweite Leitung
- 5: Schmierstoff-Sumpf
- 6: Kondensator
- 7: zweites Mittel zur Wärmeabfuhr
- 8: Kondensatableiter
- 9: Heizeinrichtung
- 10: Pumpe

## Patentansprüche

1. Kondensationsvorrichtung für einen Motor (1) mit Wasser enthaltendem Schmierstoff, umfassend
- eine erste Leitung (2) durch die das durch Verdampfen des wässrigen Schmierstoffes verdampftes Wasser durch dessen natürliche Konvektion vom Motor (1) abgeführt wird, und
- eine Druckausgleichsvorrichtung (3) über die Luft aus der Kondensationsvorrichtung entweichen kann,
**gekennzeichnet durch**
- eine zweite, von der ersten Leitung verschiedene und kühlere Leitung (4), **durch** die Kondensat zurück zum Motor (1) gelangen kann.

2. Kondensationsvorrichtung nach Anspruch 1,
**dadurch gekennzeichnet, dass** ein Kondensator (6) mit einem ersten Mittel zur Wärmeabfuhr zwischen der ersten und der zweiten Leitung (2, 4) angeordnet ist, wobei durch den Kondensator (6) zuströmendes verdampftes Wasser kondensierbar ist.

3. Kondensationsvorrichtung nach Anspruch 1,
**dadurch gekennzeichnet, dass** ein zweites Mittel zur Wärmeabfuhr (7) an der zweiten Leitung (4) angeordnet ist.

4. Kondensationsvorrichtung nach Anspruch 3,
**dadurch gekennzeichnet, dass** das zweite Mittel zur Wärmeabfuhr (7) ein Lufttrockner ist.

5. Kondensationsvorrichtung nach Anspruch 4,
**dadurch gekennzeichnet, dass** der Lufttrockner ein Zyklonabscheider ist.

6. Kondensationsvorrichtung nach Anspruch 1,
**dadurch gekennzeichnet, dass** zumindest ein geregelter Kondensatableiter (8) an der zweiten Leitung angeordnet ist.

7. Kondensationsvorrichtung nach Anspruch 3 mit einem geregelten Kondensatableiter nach Anspruch 6,
**dadurch gekennzeichnet, dass** der geregelte Kondensatableiter (8) in oder nach dem zweiten Mittel zur Wärmeabfuhr (7) angeordnet ist.

8. Kondensationsvorrichtung nach Anspruch 6,
**dadurch gekennzeichnet, dass** der geregelte Kondensatableiter (8) ein Schwimmer-Kondensatableiter ist.

9. Kondensationsvorrichtung nach Anspruch 6,
**dadurch gekennzeichnet, dass** der geregelte Kondensatableiter (8) ein elektrisch oder mechanisch angesteuertes Ventil ist.

10. Kondensationsvorrichtung nach Anspruch 6,
**dadurch gekennzeichnet, dass** eine Heizeinrichtung (9) im Bereich des geregelten Kondesatableiters (8) angeordnet ist.

11. Kondensationsvorrichtung nach Anspruch 6,
**dadurch gekennzeichnet, dass** der geregelte Kondesatableiter (8) so eingerichtet ist, dass er bei Stillstand des Motors (1) offen ist, so dass Kondensat zum Motor (1) ablaufen kann.

12. Kondensationsvorrichtung nach Anspruch 1,
**dadurch gekennzeichnet, dass** die Druckausgleichsvorrichtung (3) als Entlüftungsöffnung ausgebildet ist, durch die Luft in die Umgebung der Kondensationsvorrichtung entweichen kann.

13. Kondensationsvorrichtung nach Anspruch 1,
**dadurch gekennzeichnet, dass** die Druckausgleichsvorrichtung (3) so ausgebildet ist, dass Luft durch die Druckausgleichsvorrichtung (3) in den Bereich des Motors (1) entweichen kann.

## Claims

1. Condensation device for an engine (1) with water-containing lubricant, comprising
- a first line (2) through which the water vaporized by vaporization of the aqueous lubricant is discharged from the engine (1) under its natural convection, and
- a pressure-compensation device (3) via which air can escape from the condensation device, **characterized by**
- a second line (4) different from and cooler than the first line, through which condensate can return to the engine (1).

2. Condensation device according to Claim 1, **characterized in that** a condenser (6) with a first heat-dissipation means is arranged between the first and the second lines (2, 4), wherein inflowing vaporised water can be condensed by the condenser (6).

3. Condensation device according to Claim 1, **characterized in that** a second heat-dissipation means (7) is arranged on the second line (4).

4. Condensation device according to Claim 3, **characterized in that** the second heat-dissipation means (7) is an air dryer.

5. Condensation device according to Claim 4, **characterized in that** the air dryer is a cyclone separator.

6. Condensation device according to Claim 1, **characterized in that** at least one regulated condensate diverter (8) is arranged on the second line.

7. Condensation device according to Claim 3 with a regulated condensate diverter according to Claim 6,
**characterized in that** the regulated condensate diverter (8) is arranged in or after the second heat-dissipation means (7).

8. Condensation device according to Claim 6, **characterized in that** the regulated condensate diverter (8) is a float condensate diverter.

9. Condensation device according to Claim 6, **characterized in that** the regulated condensate diverter (8) is an electrically or mechanically controlled valve.

10. Condensation device according to Claim 6, **characterized in that** a heating device (9) is arranged in the region of the regulated condensate diverter (8).

11. Condensation device according to Claim 6, **characterized in that** the regulated condensate diverter (8) is designed such that it is open when the engine (1) has stopped, so that condensate can drain down to the engine (1).

12. Condensation device according to Claim 1, **characterized in that** the pressure-compensation device (3) is formed as a ventilation opening through which air can escape to the environment of the condensation device.

13. Condensation device according to Claim 1, **characterized in that** the pressure-compensation device (3) is formed such that air can escape through the pressure-compensation device (3) in the region of the engine (1).

## Revendications

1. Dispositif de condensation pour un moteur (1) avec un lubrifiant contenant de l'eau, comprenant
- une première conduite (2) à travers laquelle l'eau évaporée par évaporation du lubrifiant aqueux est évacuée du moteur (1) par sa convection naturelle, et
- un dispositif d'équilibrage de la pression (3) par le biais duquel de l'air peut s'échapper du dispositif de condensation,
**caractérisé par**
- une deuxième conduite (4) différente de la première conduite et plus froide, à travers laquelle du condensat peut revenir vers le moteur (1).

2. Dispositif de condensation selon la revendication 1,
**caractérisé en ce**
**qu'**un condenseur (6) avec un premier moyen d'évacuation de la chaleur est disposé entre la première et la deuxième conduite (2, 4), l'eau évaporée arrivant pouvant être condensée par le condenseur (6).

3. Dispositif de condensation selon la revendication 1,
**caractérisé en ce**
**qu'**un deuxième moyen d'évacuation de la chaleur (7) est disposé au niveau de la deuxième conduite (4).

4. Dispositif de condensation selon la revendication 3,
**caractérisé en ce que**
le deuxième moyen d'évacuation de la chaleur (7) est un déshydrateur d'air.

5. Dispositif de condensation selon la revendication 4,
**caractérisé en ce que**
le déshydrateur d'air est un séparateur à cyclone.

6. Dispositif de condensation selon la revendication 1,
**caractérisé en ce**
**qu'**au moins un purgeur de condensat régulé (8) est disposé au niveau de la deuxième conduite.

7. Dispositif de condensation selon la revendication 3, comprenant un purgeur de condensat régulé selon la revendication 6,
**caractérisé en ce que**
le purgeur de condensat régulé (8) est disposé dans le, ou en aval du, deuxième moyen d'évacuation de la chaleur (7).

8. Dispositif de condensation selon la revendication 6,
**caractérisé en ce que**
le purgeur de condensat régulé (8) est un purgeur de condensat à flotteur.

9. Dispositif de condensation selon la revendication 6,
**caractérisé en ce que**
le purgeur de condensat régulé (8) est une soupape à commande électrique ou mécanique.

10. Dispositif de condensation selon la revendication 6,
**caractérisé en ce**
**qu'**un dispositif de chauffage (9) est disposé dans la région du purgeur de condensat régulé (8).

11. Dispositif de condensation selon la revendication 6,
**caractérisé en ce que**
le purgeur de condensat régulé (8) est prévu de telle sorte qu'il soit ouvert à l'arrêt du moteur (1) de sorte que du condensat puisse s'écouler vers le moteur (1).

12. Dispositif de condensation selon la revendication 1,
**caractérisé en ce que**
le dispositif d'équilibrage de la pression (3) est réalisé sous forme d'ouverture de désaérage à travers laquelle de l'air peut s'échapper dans l'environnement du dispositif de condensation.

13. Dispositif de condensation selon la revendication 1,
**caractérisé en ce que**
le dispositif d'équilibrage de la pression (3) est réalisé de telle sorte que de l'air puisse s'échapper à travers le dispositif d'équilibrage de la pression (3) dans la région du moteur (1).
